# EUROPEAN PATENT SPECIFICATION

(11) **EP 0 758 746 B1**
(45) Date of publication and mention of the grant of the patent: **13.10.1999**
(21) Application number: 95202172.3
(22) Date of filing: 10.08.1995
(51) Int. Cl.: G01N 21/64

(54) **Method for examining the quality of material by measuring photon emission in different gaseous atmospheres**
Verfahren zur Prüfung der Qualität eines Stoffes durch Photonemissionsmessungen in unterschiedlichen Gasatmosphären
Procédé d'examen de la qualité d'un matériau par émission photonique dans des atmosphères différentes

(43) Date of publication of application: 19.02.1997
(73) Proprietor: SOCIETE DES PRODUITS NESTLE S.A., 1800 Vevey (CH)
(72) Inventor: Nilsen, Heidi, D-21244 Buchholz (DE); Seiler, Alfred, CH-1000 Lausanne 27 (CH); Trinks, Hauke, D-21244 Buchholz (DE)
(74) Representative: Pate, Frederick George

(56) References cited:
- EP-A- 0 492 961
- WO-A-80/02458
- DE-A- 3 303 510
- US-A- 4 084 905
- US-A- 4 650 336
- US-A- 4 768 390
- US-A- 5 014 225
- US-A- 5 130 545
- PATENT ABSTRACTS OF JAPAN vol. 016 no. 565 (P-1457) ,7 December 1992 & JP-A-04 216463 (HAMAMATSU PHOTONICS KK) 6 August 1992,
- DATABASE WPI Section EI, Week 9204 Derwent Publications Ltd., London, GB; Class S03, AN 92-030882 & NL-A-9 101 639 ( EARS INGENIEURSBUR) , 2 January 1992

## Description

The present invention relates to a method for examining the quality or the quality changes of a specimen of material by measuring the intensity of photons emitted by the material, which has been excited by submission to a white light source, in air and in CO₂, and correlating the measured intensities and comparing this result with similar measurements of fresh samples.

Verifying the quality of food is important both to producers and consumers. Various methods have been developed, many of which are chemical tests and require a long time and highly educated personnel to be performed.

Examples of food quality examination concern freshness of fruit, vegetables and other food-materials, radiation history of food materials, and temperature history of food materials: e.g. whether a fish sold as fresh has already been frozen.

A first decision about food quality is based on evaluation of parameters such as taste, smell, structure and appearance. In many cases the appearance of food, that means its optical properties, is the first parameter to be considered.

The present method is based on the measurement of the material light emittance called phosphorescence, which is due to electron transitions of previously excited material.

Methods are known for determining quality of material by measuring emission in air. However, these methods are very comprehensive as in order to obtain precise results it is necessary to obtain information about the spectral resolution of the measured photon emission and this complicates and prolongs the measurement and calculation procedure.

The present invention overcomes the above-mentioned drawbacks. It has surprisingly been found that by correlating photon emission from a material in air and in CO₂ and comparing this correlation with corresponding emissions of fresh material, a simple and precise examination of the material is possible. Hereinafter, the intensity of photon emission in air will be referred to as Iair and the intensity of photon emission in CO₂ will be referred to as ICO₂.

Accordingly, the present invention provides a method for examining the quality of a specimen of material by measuring the intensity of photons emitted by the material resulting from phosphorescence emission which material has been excited by submission to a white light source, said method comprises
measuring in a dark chamber comprising air the intensity of photon emission Iair from at least a sample of the specimen which has been excited for a period,
measuring in a dark chamber comprising CO₂ the intensity of photon emission ICO₂ from the same or a substantially identical specimen or a substantially identical sample or the same sample thereof which has been excited for substantially the same period, and
correlating the relation between the intensity measured in air and in CO₂ and comparing said correlation with similar measurement of a fresh sample.

By this method a simple procedure for determining the quality of a specimen is obtained, which allows a more precise examination and control of the specimen. It has been found that the emission level from a specimen in CO₂ is substantially reduced when compared with the emission level in air. This difference in emission allows a precise correlation between the two levels. It has also surprisingly been found that the ratio between the emission levels will change with the change in quality of the specimen. Therefore, it is possible to assess the quality of the specimen by comparing its ratio with reference ratios of known qualities.

In the present context the term white light source is a source emitting light in the range of 350 to 750 nm. The excitation in air and CO₂ lasts for the same length of time as a result of which it is possible to compare and correlate the emission from the material.

The correlation between the intensity measured in air and in CO₂ may advantageously be ICO₂/Iair. This ratio is compared with a corresponding ratio for a fresh sample. If the ratio is bigger than that of the fresh sample then the quality is lower. The ratio of the examined sample may also be compared with values of samples at different states of freshness so as to determine the relative freshness of the sample. Alternatively, a correlation ratio of (ICO₂-Iair)/Iair may be used for the comparisons discussed above.

Conveniently, the intensities of the photon emission are measured at a predetermined wavelength or alternatively, at a predetermined wavelength band.

It is preferred that the same sample is used for the measurements in both air and CO₂ in order to obtain precise quality assessment. The sample may be positioned in the chamber and excited therein before the white light source is turned off and intensity of the photon emission is measured for a fixed time period in the dark chamber. Preferably, the same chamber is used for both the air and CO₂ measurements. This will eliminate any erroneous influence from the chamber as the two measurements are correlated. The most precise results are obtained if the intensity measurements are carried out immediately after the excitation as the emission from the sample is then strongest.

In a preferred embodiment of the method according to the invention the sample is positioned in the chamber containing air and submitted to photons from the white light source, the white light source is turned off and Iair is measured for a time period, the chamber is flushed with CO₂ and the sample is again submitted to photons from the white light source, and the white light source is turned off and ICO₂ is measured for substantially the same time period.

In a favourable embodiment, the method comprises the steps of examining the specimen by direct imaging by means of a high sensitivity camera or a charge coupled device camera using the photons emitted by the specimen placed in a dark chamber and by using said camera for measuring the intensities of photons by connecting a spectrograph or a filter device between the specimen and the camera. Alternatively, a photo multiplier can be used for the intensity measurements.

Light emission from the sample surface and volume is not always uniformly distributed. Hot spots, areas with intense light emission, may appear. These may be studied separately or avoided, if necessary, by these imaging features, in order to improve the certainty of the quality assessment.

In another aspect, the invention relates to a device for implementing the above-described method. The device comprises a measurement chamber, CO₂ supply means and CO₂ evacuation means, a source of photons producing the emission of photons at a wavelength appropriate for the excitation of the specimen, means for selectively choosing photons of predetermined wavelength or wavelengths emitted by the specimen and amplifying detector means for measuring the intensities of these photons of predetermined wavelength or wavelengths. The apparatus used for carrying out the method according to the invention will be described in further detail with reference to the accompanying drawings.

The invention relates also to the use of the method for examining the quality of a a) fresh/aged, and/or b) frozen/not frozen and/or c) heated/not heated and/or d) irradiated/ not irradiated specimen of food material, and/or for examining the thermal history of a specimen and/or the storing conditions of a specimen, in particular of food material and for the study of the kinetics of a biological process involving photon emission.

The method, device and use according to the invention will now be described in greater detail with reference to the accompanying drawings given by way of example in which:

Figure 1 represents an apparatus for implementing the measurement method.

Figure 2 illustrates a more complete equipment for implementing the measurement method.

Figure 3 illustrates schematically the measurement procedure according to the invention.

Figure 4 is a diagram showing the effect of freezing-thawing of fresh leaves measured in air.

Figure 5 is a diagram showing the effect of heating a fresh leaf measured in air.

Figure 6 is a diagram showing measurements in air and in CO₂ of an excited spinach sample.

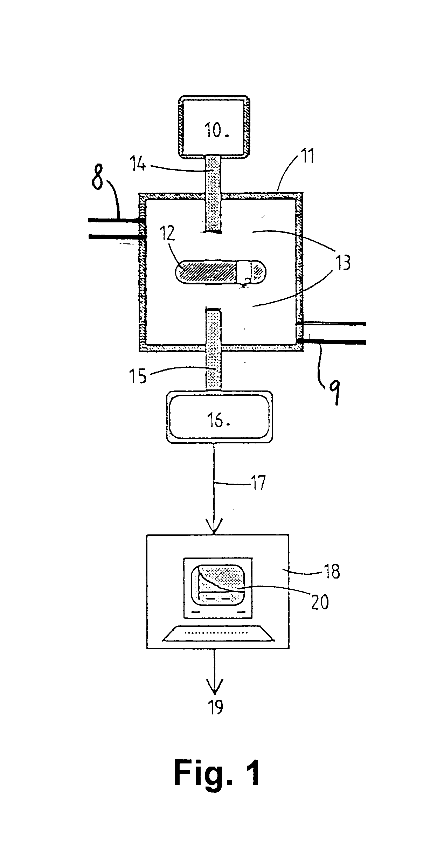

As schematically represented in figure 1, the equipment, device or apparatus for implementing the measurement method comprises a light source 10, a measurement chamber 11 in which the specimen 12 to be examined is placed, CO₂ supply means 8 for supplying CO₂ to the chamber and CO₂ evacuate means 9 for emptying the chamber again. Furthermore, comprised is a first light conductor 14 to conduct the light from the source 10 and emit it to the specimen and a second light sensor and conductor 15 to detect the light from the specimen and conduct it to a detector device 16. The measurement values 17 are transferred from the detector device 16 to a computer 18 which calculates and presents the evaluated results 19.

Excitation of biological material is performed with a white light source 10, in special cases with an UV source. Knowing that UV light may negatively affect biological processes and observing that the white light source gives the best sample emission response, it is used in the present measurements.

The spectral detector device 16 can be a photo multiplier, a high sensitivity camera or an intensified charge coupled device type camera associated with a filter device or a spectrograph.

In order to observe the specimen by an imaging technique instead of measuring the spectral light distribution, the spectrograph/filter can be replaced by an optical lens allowing the recording of a light emission map of the luminescent specimen on a screen 20.

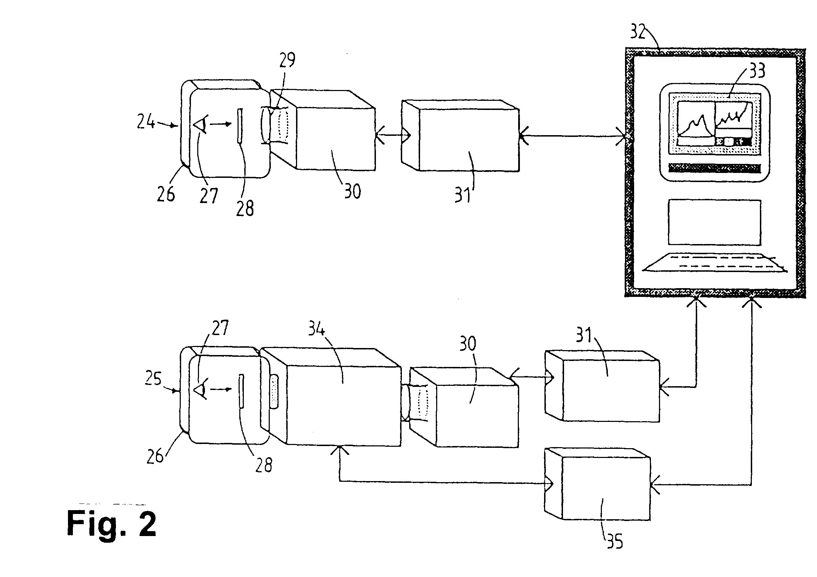

In an extended version for research work represented in figure 2, the equipment may comprise a first set-up 24 as an imaging system and a second set-up 25 as a spectrograph system.

The first set-up 24 comprises a measurement dark chamber 26 containing a broad spectrum light source 27 and a specimen holder, a lens 29, a camera 30, for example an intensified charge coupled detector camera (ICCD), as the detector camera 576S/RB sold by SPECTROSCOPY INSTRUMENTS GmbH, D-8031 GILCHING, a controller unit 31 for the detector camera, for example the ST-130 unit sold by the same company, and a computer 32 allowing to interact with the controller unit 31 and to visualise the image recorded by the camera 30 on a screen 33.

In the second set-up 25, the measurement dark chamber 26, the light source 27 and the specimen 28 with holder remain unchanged, but a spectrograph 34 is put between the specimen chamber 26 and the ICCD camera 30. This spectrograph 34 may be obtained from the above-mentioned company under No. ISP-250, comprising three exchangeable gratings providing three spectral resolutions. The spectrograph 34 is controlled by a step-motor controller 35 linked to the computer 32. Advantageously, the spectrograph may be used to select a single wavelength or a wavelength band. The colour spectra, intensity emitted as a function of wavelength, obtained in the spectrograph 34, is recorded by means of the ICCD camera and the measurement results are processed in the computer 32. The set-ups 24 and 25 comprise also CO₂ supply means and evacuate means which are not shown in the drawings.

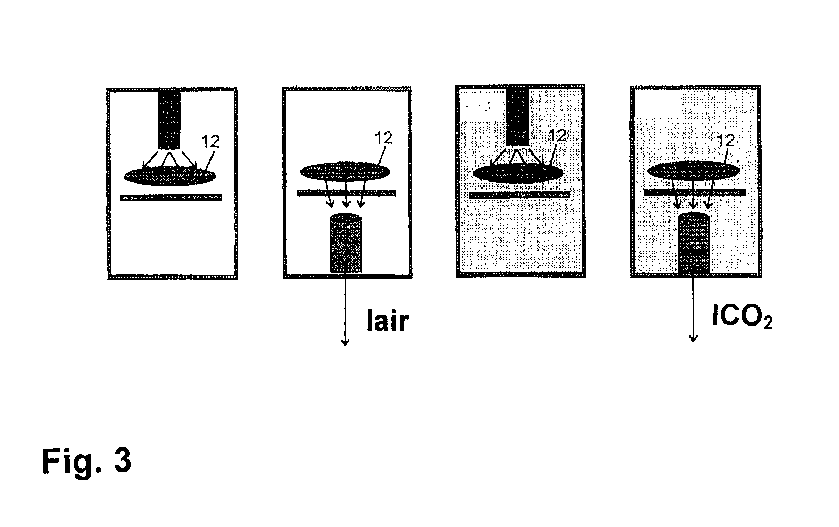

The measurement procedure comprises the following steps illustrated schematically in figure 3.
1.A specimen 12 is placed in a dark chamber containing air.
2.The specimen is light excited for a set time period t1 by means of a light source at a determined wavelength band.
3.Immediately after light excitation the intensity of the specimens emission Iair is measured in a time interval t2. The intensity is measured at a single wavelength or a wavelength band.
4.The specimen remains in the dark chamber while the chamber is flushed with CO₂, e.g. at a flushing rate of approximately 300 ml/min. After 20 sec of CO₂ flushing, the specimen is light excited with the light source at the same wavelength range as in air and for the period t1.
5.Immediately after the light excitation of the specimen the intensity of the emission from the specimen ICO₂ is measured for the period t2.

The measured intensities Iair and ICO₂ are then correlated to diminish any error factors which might have influenced the measurements. This correlation is then compared with reference values and consequently a precise indication of the quality of the specimen is obtained. If the quality of the sample is expressed by the relation ICO₂/Iair, the quality is good if the relation is small. From which it follows that a ratio close to 1 indicates a bad quality.

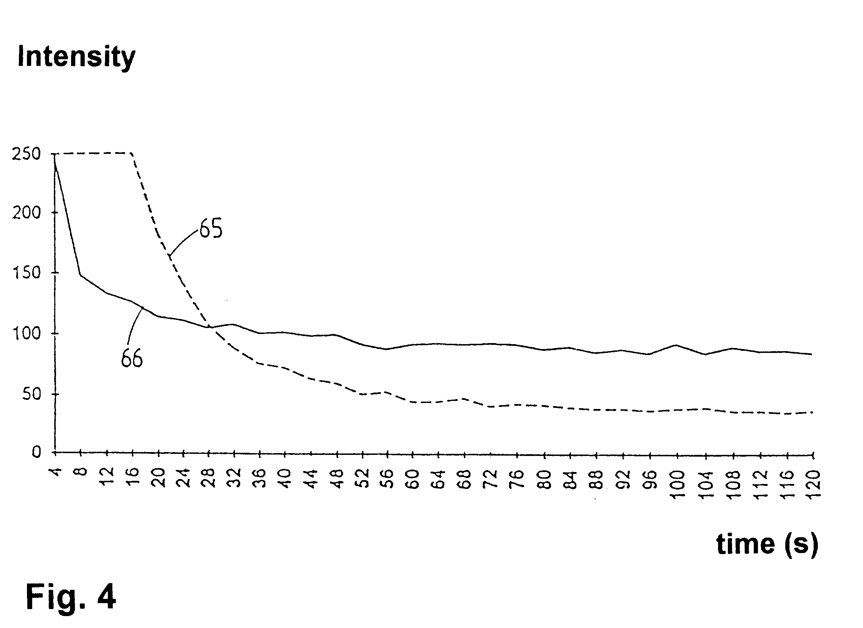

An example of a measurement in air is represented in figure 4 showing that the effect of freezing-thawing of fresh leaves causes a significant change in the biophoton emission. Figure 4 displays the emission intensity in counts/(sec cm²) for a fresh leaf (curve 65) and for a frozen-thawed leaf (curve 66) as a function of the time in seconds after turning off the light excitation. Here 1 count/ (sec cm²) corresponds to 10 photons/(sec cm²). The difference in the emission of biophotons is an indication of the material changes that have taken place in the frozen-thawed leaf. Both in maximum emission intensity and in end-level emission the frozen-thawed sample differs from the fresh sample.

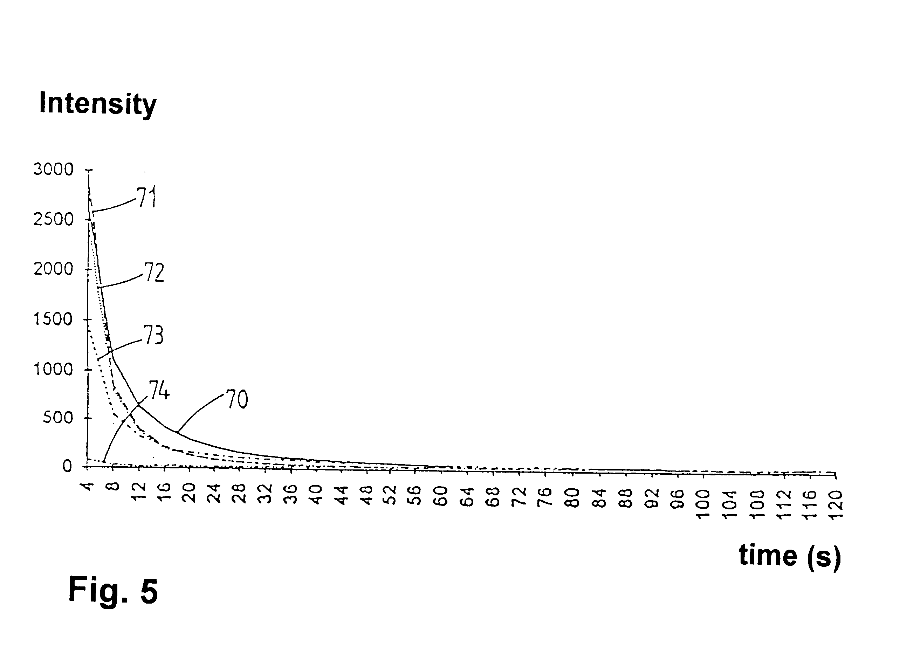

The effect of heating a fresh leaf is studied in a third example illustrated in figure 5. The diagram shows the sample emission decay curves as a function of the time in seconds after turning off the light excitation. Each curve corresponds to measurements at a given temperature, in particular curve 70 at 22°C, 71 at 30°C, 72 at 40°C, 73 at 52°C and 74 at 60°C.

For the temperatures 22, 30 and 40°C leaf emission has the decay characteristics of a normal fresh sample. For 52°C maximum intensity is below 1500 ct/(sec cm2) and for 60°C the emission response of the leaf is very weak: maximum emission is below 100ct/(sec cm2). This breakdown in emission ability is final. Further measurements with the heated sample showed that it did not recover to a state where it gave the emission response of a fresh sample.

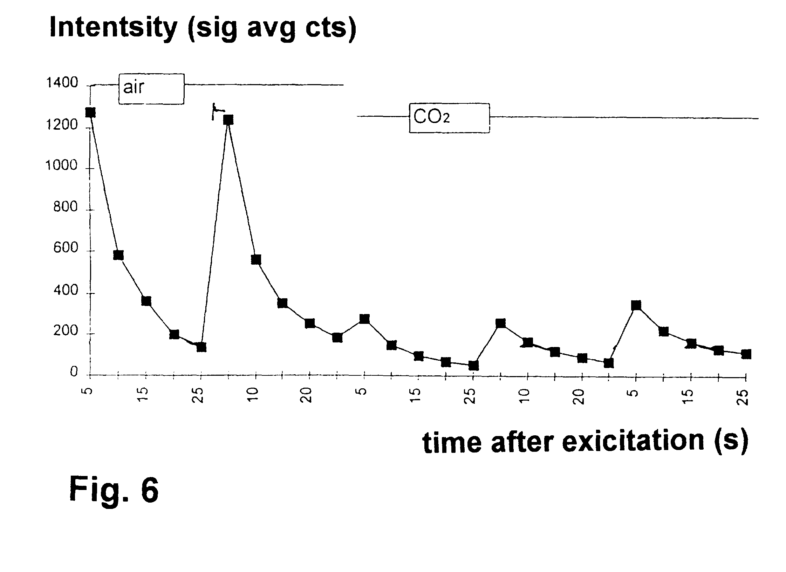

Figure 6 shows measurements in air and in CO₂ of an excited spinach sample. The excitation was carried out with the above-described method and apparatus. The excitation was by means of a white lamp and the excitation time was 10 sec. The measurements show a clear reduction in the emission response once the chamber was flushed with CO₂. The CO₂ caused a reduction in the maximum emission level of about 70%, and the emission decay was also slower. Re-excitation of the sample while it was exposed to CO₂ (for a period of 5 sec.) gave an increase in the emission response, but the emission did not recover the intensity recorded in air.

As it will be apparent from the diagram in figure 6 the ratio between the intensities measured in CO₂ and those measured in air is approximately 0.2. Experiments have shown that the ratio of a fresh sample is below 0.25, and accordingly is the sample shown in figure 6 is fresh.

Table 1 gives an indication of the intensities in Iair and ICO₂, and the ration between ICO₂/Iair which can be expected for fresh, aged, old and frozen-thawed material.

**Table 1**

| Material state | Fresh | Ageing | Old | Frozen-Thawed |
|---|---|---|---|---|
| Iair | 1400 | 700 | 55 | 500 |
| ICO₂ | 300 | 200 | 50 | 200 |
| ICO₂/Iair | 0.21 | 0.28 | 0.91 | 0.4 |

Finally, it should be noted that corresponding measurements have also been carried out in air and N₂ for edible green vegetables. However, the N₂ atmosphere has no influence on the emission response. Consequently, it is believed that such atmosphere is unsuitable for correlation and comparative assessment of quality material.

## Claims

1. Method for examining the quality of a specimen of material by measuring the intensity of photons emitted by the material resulting from phosphorescence emission which material has been excited by submission to a white light source, said method comprises
measuring in a dark chamber comprising air the intensity of photon emission lair from at least a sample of the specimen which has been excited for a period,
measuring in a dark chamber comprising CO₂ the intensity of photon emission ICO₂ from the same or a substantially identical specimen or a substantially identical sample or the same sample thereof which has been excited for substantially the same period, and
correlating the relation between the intensity measured in air and in CO₂ and comparing said correlation with similar measurement of a fresh sample.

2. A method according to claim 1, wherein the intensity is measured at a predetermined wavelength.

3. A method according to claim 1, wherein the intensity is measured at a predetermined band of wavelengths.

4. A method according to any of claims 1 to 3, wherein the sample used for the measurement in air and in CO₂ is the same.

5. A method according to any of claim 1 to 4, wherein the sample is positioned in the chamber and light excited therein before the white light source is turned off and intensity of the photon emission is measured for a time period in the dark chamber.

6. A method according to any of claims 1 to 6, wherein the same chamber is used for measuring Iair and ICO₂.

7. A method according to any of claims 1 to 6, wherein the sample is positioned in the chamber containing air and submitted to photons from the white light source, the white light source is turned off and Iair is measured for a time period, the chamber is flushed with CO₂ and the sample is again submitted to photons from the white light source, and the white light source is turned off and ICO₂ is measured for substantially the same time period.

8. A method according to any of claims 1 to 7, wherein the correlation between the intensity measured in air and in CO₂ is ICO₂/Iair.

9. A method according to any of claims 1 to 8, wherein the correlation between the intensity measured in air and in CO₂ is (Iair-ICO₂)/Iair.

10. A method according to any of claims 1 to 9, wherein the intensities of photons emitted are measured immediately after the excitation.

11. A method according to any of claim 1 to 10, wherein the intensities are measured by direct imaging by means of a high sensitive camera or a charge coupled device camera or by intensity measurement with a photo multiplier.

12. Phosphorescence detection device for implementing the method as claimed in one of the claims 1 to 11, said device comprising a measurement chamber (26), CO₂ supply and evacuate means, a source of photons (10) producing the emission of photons at a wavelength appropriate for the excitation of the specimen, means for selectively choosing photons of predetermined wavelength or wavelengths emitted by the specimen and amplifying detector means (16) for measuring the intensities of these photons of predetermined wavelength or wavelengths.

13. Use of the method according to claims 1 to 9, for examining the quality of a a) fresh/aged, and/or b) frozen/not frozen and/or c) heated/not heated and/or d) irradiated/not irradiated specimen of food material, and/or for examining the thermal history of a specimen and/or the storing conditions of a specimen, in particular food material.

## Patentansprüche

1. Verfahren zur Prüfung der Qualität eines Untersuchungsmaterials, bei dem die Intensität der aufgrund einer Phosphoreszenzemission von dem Material emittierten Photonen gemessen wird, wobei das Material angeregt worden ist, indem es einer weißen Lichtquelle ausgesetzt wurde, wobei dieses Verfahren umfaßt
Messen der Intensität der Photonenemission ILuft von wenigstens einer Probe des Untersuchungsmaterials, das für eine gewisse Zeitdauer angeregt worden ist, in einer Dunkelkammer, die Luft enthält,
Messen der Intensität der Photonenemission ICO₂ des gleichen oder im wesentlichen identischen Untersuchungsmaterials oder einer im wesentlichen identischen Probe oder der gleichen Probe davon, die für im wesentlichen die gleiche Zeitdauer angeregt worden ist, in einer Dunkelkammer, die CO₂ enthält, und
Korrelieren des Verhältnisses zwischen der in Luft und in CO₂ gemessenen Intensität und Vergleichen der Korrelation mit einer ähnlichen Messung einer frischen Probe.

2. Verfahren nach Anspruch 1, bei dem die Intensität bei einer festgelegten Wellenlänge gemessen wird.

3. Verfahren nach Anspruch 1, bei dem die Intensität in einem festgelegten Wellenlängenband gemessen wird.

4. Verfahren nach irgendeinem der Ansprüche 1 bis 3, bei dem die für die Messung in Luft und in Kohlendioxid verwendete Probe die gleiche ist.

5. Verfahren nach irgendeinem der Ansprüche 1 bis 4, bei dem die Probe in der Kammer angeordnet und darin mit Licht angeregt wird, bevor die weiße Lichtquelle ausgeschaltet wird und die Intensität der Photonenemission für eine Zeitdauer in der Dunkelkammer gemessen wird.

6. Verfahren nach irgendeinem der Ansprüche 1 bis 6, bei dem die gleiche Kammer für die Messung von ILuft und ICO₂ verwendet wird.

7. Verfahren nach irgendeinem der Ansprüche 1 bis 6, bei dem die Probe in der Kammer, die Luft enthält, angeordnet und Photonen von der weißen Luftquelle ausgesetzt wird, die weiße Lichtquelle ausgeschaltet und ILuft für eine gewisse Zeitdauer gemessen wird, die Kammer mit CO₂ geflutet und die Probe wieder Photonen von der weißen Lichtquelle ausgesetzt wird, und die weiße Lichtquelle ausgeschaltet und ICO₂ für im wesentlichen die gleiche Zeitdauer gemessen wird.

8. Verfahren nach irgendeinem der Ansprüche 1 bis 7, bei dem die Korrelation zwischen der in Luft und in CO₂ gemessenen Intensität ICO₂/ILuft ist.

9. Verfahren nach irgendeinem der Ansprüche 1 bis 8, bei dem die Korrelation zwischen der in Luft und in CO₂ gemessenen Intensität (ILuft-ICO₂)/ILuft ist.

10. Verfahren nach irgendeinem der Ansprüche 1 bis 9, bei dem die Intensitäten der emittierten Photonen sofort nach der Anregung gemessen werden.

11. Verfahren nach irgendeinem Anspruch 1 bis 10, bei dem die Intensitäten durch direkte Bilderzeugung mit Hilfe einer hochempfindlichen Kamera oder einer Ladungsspeicherelement-Kamera (CCD-Kamera) gemessen werden, oder durch Messung der Intensität mit einem Photomultiplier.

12. Phosphoreszenzdetektiervorrichtung zur Durchführung des Verfahrens, wie es in einem der Ansprüche 1 bis 11 beansprucht wird, wobei diese Vorrichtung umfaßt: eine Meßkammer (26), CO₂-Zufuhr- und Evakuierungseinrichtungen, eine Photonenquelle (10), die die Emission von Photonen bei einer für die Anregung des Untersuchungsmaterials geeigneten Wellenlänge bewirkt, eine Einrichtung für das selektive Auswählen von Photonen mit festgelegter Wellenlänge oder festgelegten Wellenlängen, die von dem Untersuchungsmaterial emittiert werden, und eine Verstärkungsdetektoreinrichtung (16) für das Messen der Intensitäten dieser Photonen mit der oder den festgelegten Wellenlänge(n).

13. Anwendung des Verfahrens nach den Ansprüchen 1 bis 9 zur Prüfung der Qualität eines a) frischen/gealterten und/oder b) gefrorenen/nicht gefrorenen und/oder c) erwärmten/nicht erwärmten und/oder d) bestrahlten/nicht bestrahlten Nahrungsmittel-Untersuchungsmaterials, und/oder für die Prüfung der thermischen Vorgeschichte eines Untersuchungsmaterials und/oder der Lagerbedingungen eines Untersuchungsmaterials, insbesondere eines Nahrungsmittels.

## Revendications

1. Procédé pour examiner la qualité d'un spécimen de matière en mesurant l'intensité de photons émis par la matière résultant d'une émission par phosphorescence, laquelle matière a été excitée en la soumettant à une source de lumière blanche, ledit procédé comprenant :
la mesure, dans une chambre noire contenant de l'air, de l'intensité de l'émission de photons Iair en provenance d'au moins un échantillon du spécimen qui a été excité pendant une certaine période,
la mesure, dans une chambre noire contenant du CO₂, de l'intensité de l'émission de photons ICO₂ en provenance du même spécimen ou d'un spécimen sensiblement identique ou d'un échantillon sensiblement identique ou du même échantillon de ce dernier qui a été excité pendant sensiblement la même période, et
la corrélation de la relation entre l'intensité mesurée dans l'air et dans le CO₂ et la comparaison de ladite corrélation à une mesure similaire d'un échantillon frais.

2. Procédé selon la revendication 1, dans lequel l'intensité est mesurée à une longueur d'onde prédéterminée.

3. Procédé selon la revendication 1, dans lequel l'intensité est mesurée à une bande prédéterminée de longueurs d'ondes.

4. Procédé selon l'une quelconque des revendications 1 à 3, dans lequel l'échantillon utilisé pour la mesure dans l'air et dans le CO₂ est le même.

5. Procédé selon l'une quelconque des revendications 1 à 4, dans lequel l'échantillon est positionné dans la chambre et est excité en son sein par une lumière avant que la source de lumière blanche ne soit éteinte, et l'intensité de l'émission de photons est mesurée pendant une certaine période de temps dans la chambre noire.

6. Procédé selon l'une quelconque des revendications 1 à 5, dans lequel la même chambre est utilisée pour mesurer Iair et ICO₂.

7. Procédé selon l'une quelconque des revendications 1 à 6, dans lequel l'échantillon est positionné dans la chambre contenant de l'air et est soumis à des photons en provenance de la source de lumière blanche, la source de lumière blanche est éteinte et Iair est mesurée pendant une certaine période de temps, la chambre est rincée au CO₂ et l'échantillon est de nouveau soumis à des photons en provenance de la source de lumière blanche, et la source de lumière blanche est éteinte et ICO₂ est mesurée pendant sensiblement la même période de temps.

8. Procédé selon l'une quelconque des revendications 1 à 7, dans lequel la corrélation entre l'intensité mesurée dans l'air et dans le CO₂ est ICO₂/Iair.

9. Procédé selon l'une quelconque des revendications 1 à 8, dans lequel la corrélation entre l'intensité mesurée dans l'air et dans le CO₂ est (Iair - ICO₂)/Iair.

10. Procédé selon l'une quelconque des revendications 1 à 9, dans lequel les intensités des photons émis sont mesurées immédiatement après l'excitation.

11. Procédé selon l'une quelconque des revendications 1 à 10, dans lequel les intensités sont mesurées par imagerie directe au moyen d'un appareil de prise de vues à haute sensibilité ou d'un appareil de prise de vues à circuit à couplage de charges ou par une mesure d'intensité au moyen d'un photomultiplicateur.

12. Dispositif de détection de phosphorescence pour mettre en pratique le procédé selon l'une des revendications 1 à 11, ledit dispositif comprenant une chambre de mesure (26), des moyens d'amenée et d'évacuation de CO₂, une source de photons (10) produisant l'émission de photons à une longueur d'onde appropriée pour l'excitation du spécimen, des moyens pour choisir, de manière sélective, des photons de longueur d'onde ou de longueurs d'ondes prédéterminées émis par le spécimen et des moyens formant détecteur à amplification (16) pour mesurer les intensités de ces photons de longueur d'onde ou de longueurs d'ondes prédéterminées.

13. Utilisation du procédé selon les revendications 1 à 9, pour examiner la qualité d'un spécimen de denrée alimentaire a) frais/vieux, et/ou b) congelé/non congelé et/ou c) chauffé/non chauffé et/ou d) irradié/non irradié, et/ou pour examiner l'historique thermique d'un spécimen et/ou les conditions de stockage d'un spécimen, en particulier de denrée alimentaire.
